# EUROPEAN PATENT SPECIFICATION

(11) **EP 3 314 053 B1**
(45) Date of publication and mention of the grant of the patent: **18.12.2019**
(21) Application number: 16728696.2
(22) Date of filing: 13.06.2016
(51) Int. Cl.: D06F 37/22, D06F 37/24, F16F 15/36

(54) **WASHING MACHINE AND BALANCE RING FOR WASHING MACHINE**
WASCHMASCHINE UND AUSWUCHTRING FÜR DIE WASCHMASCHINE
MACHINE À LAVER ET ANNEAU D'ÉQUILIBRAGE POUR MACHINE À LAVER

(30) Priority: 24.06.2015 CN 201510353755
(43) Date of publication of application: 02.05.2018
(73) Proprietor: BSH Hausgeräte GmbH, 81739 München (DE)
(72) Inventor: CUI, Xuli, Nanjing City Nanjing 211000 (CN); FAN, Zongwen, Nanjing (CN); LIU, Yanjie, Jiangsu Province 210000 Nanjing (CN); PLAGEMANN, Markus, 10965 Berlin (DE)
(86) International application number: PCT/EP2016/063505
(87) International publication number: WO 2016/207011

(56) References cited:
- EP-A1- 2 752 516
- EP-A1- 2 826 908
- CN-A- 101 666 021
- CN-U- 203 229 775
- JP-A- S54 120 957

## Description

The present invention relates to a washing machine and a balance mechanism for a washing machine.

A washing machine usually has a drum that can be driven by a motor to rotate. Washing and dewatering operations are performed on clothes in the drum. To make the drum tend to balance during a rotation process, and to reduce vibration and noise that are generated due to unbalanced rotation of the drum, a balance ring may be installed on the drum along a circumference of the drum. A balance ring includes an annular channel and several spheres that are contained in the channel and are rollable along the channel. During a dewatering process with the drum rotating at a high speed, the spheres automatically adjust distribution positions according to an unbalanced distribution state of the clothes in the drum, so as to make the whole drum achieve or tend to balance.

To reduce noise that is generated from mutual collision of the spheres before the spheres reaches balance, a viscous fluid may be injected into the channel, kinetic energy of the collision of the spheres are absorbed by using viscous drag, so as to reduce the noise. However, during the dewatering process with the drum rotating at a high speed, when the spheres in the annular channel just reach stable positions, continuous impact noise of the spheres may occur due to the vibration of a drum system.

Balance rings and washing machine comprising said balance rings are disclosed in EP 2 826 908 A1 and EP 2 752 516 A1. Said balance rings are mounted at a drum of the washing machine and have an annular channel whereby movable mass bodies are disposed within the channel. A plurality of protrusions is formed on an inner surface of the channel to restrict the movement of the bodies when the rotational speed of the drum is within a specific rotational speed range.

One objective of the present invention is to provide an improved balance ring for a washing machine, so as to reduce impact noise of spheres.

With regard to the foregoing objective, a technical solution adopted by the present invention is: a balance ring for a washing machine, including: an annular channel, where a viscous fluid and a plurality of spheres rollable along the channel are provided in the channel, and an inner wall of the channel is provided with a plurality of ribs.

The inner wall of the channel is provided with a plurality of ribs, and when the spheres roll in the channel at a high speed, gaps between the spheres and the channel become smaller when the spheres pass the ribs. Therefore, a damping force provided by the viscous fluid adsorbed near the ribs increases, and quickly absorbs kinetic energy of the spheres with respect to the channel, so as to eliminate impact noise of the spheres.

Further the inner wall of the channel includes an abaxial portion radially away from a central axis of the channel, an adaxial portion opposite to the abaxial portion and near the central axis of the channel, and a side portion for connecting the abaxial portion and the adaxial portion; and the ribs are at least partially located on the abaxial portion. When the balance ring reaches a particular rotation speed, the spheres and the viscous fluid are distributed on the abaxial portion under the effect of a centrifugal force. The ribs that are at least partially distributed on the abaxial portion may adsorb more viscous fluid, so as to increase resistance to motion of the spheres.

Furthermore the abaxial portion includes a smooth middle part; the middle part forms a rolling path of the spheres; and the ribs are located at at least one side of the middle part of the abaxial portion.

As one of the optional implementation manners, the ribs are at least partially located at a corner that connects the abaxial portion and the side portion.

As one of the optional implementation manners, space for accommodating the viscous fluid is formed between the ribs and the corner.

As one of the optional implementation manners, the ribs have arc-shaped concave ridge portions, so that the ribs can be in contact with the spheres in a larger area.

As one of the optional implementation manners, the radians of the ridge portions of the ribs match with the shapes of the spheres.

As one of the optional implementation manners, the ridge portions of the ribs and the spheres form concentric circles on a radial section of the annular channel.

As one of the optional implementation manners, gaps are provided between the ribs and the spheres, and the viscous fluid is filled in the gaps.

As one of the optional implementation manners, the ribs are uniformly distributed along a circumference of the annular channel.

As one of the optional implementation manners, the ribs extend along a radial direction of the annular channel.

The present invention further provides a washing machine, including a drum that can be driven by a motor to rotate, where a circumference of the drum is provided with the foregoing balance ring.

The drum of the washing machine may be horizontal, inclined, or vertical.

Preferred embodiments of the present invention are further described below with reference to the Figures of the accompany drawing. The disclosure by these embodiments will become more fully understood from the detailed description given hereinbelow for illustration only, and thus these embodiments are not limitative of the disclosure. In the drawing:
- FIG. 1: is a schematic diagram of a washing machine with a balance ring;
- FIG. 2: is a schematic diagram of an axial part of the balance ring, and the part is located at the bottom of the balance ring in FIG. 1;
- FIG. 3: is a three-dimensional diagram of the part of the balance ring in FIG. 2; and
- FIG. 4: is a diagram of a radial section of the balance ring, and the position of the section is at the bottom of the balance ring in FIG. 1.

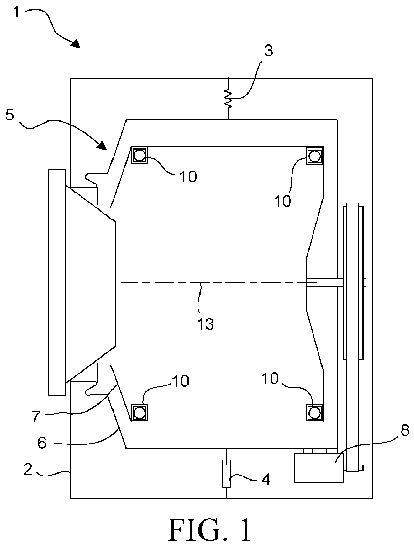

As shown in FIG. 1, a washing machine 1 includes a case body 2, and a drum system 5 that is suspended in the case body 2 by using an elastic suspension unit 3 and a damping and supporting unit 4. The drum system 5 includes a tub 6 that is connected to the elastic suspension unit 3 and the damping and supporting unit 4, a drum 7 that is roughly coaxially installed in the tub 6, and a motor 8 for driving the drum 7 to perform rotation motion.

Balance rings 10 are separately installed, along a circumference of a wall of the drum 7, at positions near axial end portions of two sides of the drum 7. The balance rings 10 are coaxially disposed with the drum 7. Alternatively, in other alternative implementation manners, a balance ring 10 may be disposed at one end of a drum 7.

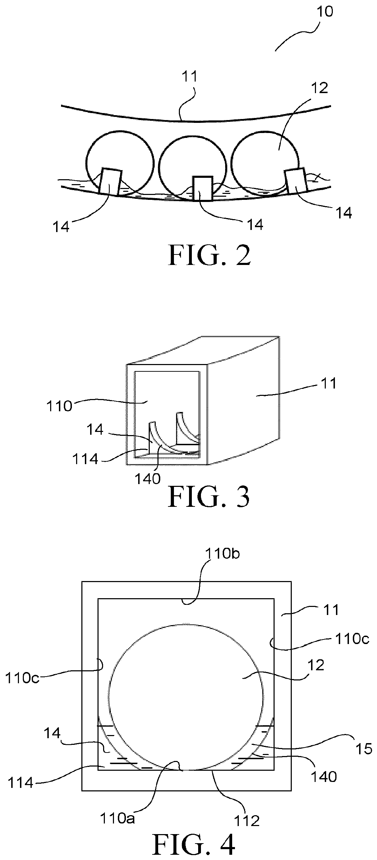

As shown in FIG. 2 to FIG. 4, a balance ring 10 includes an annular channel 11, and viscous oil and a plurality of spheres 12 rollable along the channel that are contained in the channel 11. The spheres 12 are arranged as a single row in the channel 11, and the diameters of spheres 12 are slightly less than the inner diameter of the channel 11.

An inner wall 110 of the annular channel 11 includes an abaxial portion 110a radially away from a central axis 13 of the channel, an adaxial portion 110b opposite to the abaxial portion 110a and near the central axis 13 of the channel, and a side portion 110c for connecting the abaxial portion 110a and the adaxial portion 110b. The abaxial portion 110a includes a smooth middle part 112, and the middle part 112 extends along a circumference and forms a rolling path of the spheres 12. Moreover, a plurality of ribs 14 extending along a radial direction of the annular channel 11 are disposed at two sides of the middle part 112 and across the corner 114 that connects the abaxial portion 110a and the side portion 110c. Preferably, the ribs 14 are uniformly distributed along a circumference of the annular channel 11.

The ribs 14 have arc-shaped concave ridge portions 140. In addition, the ridge portions 140 and the spheres 12 form concentric circles on a radial section of the annular channel 11, or the ridge portions 140 have other radians matching with the shapes of the spheres 12, so as to form roughly uniform gaps 15 between the ridge portions 140 and surfaces of the spheres 12. The viscous oil is filled in the gaps 15. Meanwhile, the viscous oil is further filled in space formed between the ribs 14 and the corner 114.

Therefore, when the drum 7 rotates at a high speed to dewater clothes, the spheres 12 and the viscous oil perform eccentric movement in the channel 11 with the rotation of the drum 7, and effects of the eccentric movement are applied to the abaxial portion 110a of the inner wall 110 of the channel 11. Before the spheres 12 are stable with respect to the channel 11, when the spheres 12 roll in the channel 11 at a high speed, gaps between the spheres 12 and the inner wall 110 of the channel 11 become smaller when the spheres 12 pass the ribs 14. Therefore, a damping force provided by the viscous oil adsorbed near the ribs 14 increases, and quickly absorbs kinetic energy of the spheres 12 with respect to the channel 11, so as to eliminate impact noise of the spheres 12.

Specific implementation manners described in the foregoing and shown in the accompany drawings are merely used to illustrate the present invention, but are not all of the present invention. Any variation to the present invention made by a person of ordinary skill in the art within the scope of the basic technical thought of the present invention falls within the protection scope of the present invention, as defined by the appended claims.

### REFERENCE NUMERALS

- 1: Washing machine
- 2: Case body
- 3: Suspension unit
- 4: Damping and supporting unit
- 5: Drum system
- 6: Tub
- 7: Drum
- 8: Motor
- 10: Balance ring
- 11: Annular channel
- 12: Sphere
- 13: Central axis
- 14: Rib
- 15: Gap
- 110: Inner wall
- 110a: Abaxial portion
- 110b: Adaxial portion
- 110c: Side portion
- 112: Middle part
- 114: Corner
- 140: Ridge portion

## Claims

1. A balance ring (2) for a washing machine (1), comprising: an annular channel (11), wherein viscous fluid and a plurality of spheres (12) rollable along the channel (11) are provided in the channel (11), **whereby** an inner wall (110) of the channel (11) is provided with a plurality of ribs (14) and whereby the inner wall (110) of the channel (11) comprises an abaxial portion (110a) radially away from the central axis (13) of the channel (11), an adaxial portion (110b) opposite to the abaxial portion (110a) and near the central axis (131) of the channel (11), and a side portion (110c) for connecting the abaxial portion (110a) and the adaxial portion (110b) **characterized in that** the ribs (14) are at least partially located on the abaxial portion (110a) and the abaxial portion (110a) comprises a smooth middle part (112), the middle part (112) forms a rolling path of the spheres (12), and the ribs (14) are located at at least one side of the middle part (112) of the abaxial portion (110a).

2. The balance ring (2) according to claim 1, **characterized in that** the ribs (14) are at least partially located at a corner (114) that connects the abaxial portion (110a) and the side portion (110c).

3. The balance ring (2) according to claim 2, **characterized in that** space for accommodating the viscous fluid is formed between the ribs (14) and the corner (114).

4. The balance ring (2) according to any preceding claim, **characterized in that** the ribs (14) have arc-shaped concave ridge portions (140).

5. The balance ring (2) according to claim 4, **characterized in that** the radians of the ridge portions (140) of the ribs (14) match with the shapes of the spheres (12).

6. The balance ring (2) according to one of claims 4 and 5, **characterized in that** the ridge portions (140) of the ribs (14) and the spheres (12) form concentric circles on a radial section of the annular channel (11).

7. The balance ring (2) according to any preceding claim, **characterized in that** gaps (15) are provided between the ribs (14) and the spheres (12), and the viscous fluid is filled in the gaps (15).

8. The balance ring (2) according to any preceding claim, **characterized in that** the ribs (14) are uniformly distributed along a circumference of the annular channel (11).

9. The balance ring (2) according to any preceding claim, **characterized in that** the ribs (14) extend along a radial direction of the annular channel (11).

10. A washing machine (1), comprising: a drum (7) that can be driven by a motor (8) to rotate, **characterized in that** a circumference of the drum (7) is provided with the balance ring (2) according to any one of the foregoing claims.

## Patentansprüche

1. Auswuchtring (2) für eine Waschmaschine (1), der Folgendes umfasst: einen ringförmigen Kanal (11), wobei viskoses Fluid und mehrere Kugeln (12), die den Kanal (11) entlangrollen können, in dem Kanal (11) vorgesehen sind, **wobei** eine Innenwand (110) des Kanals (11) mit mehreren Rippen (14) versehen ist und einen radial von der Mittelachse (13) des Kanals (11) entfernt liegenden, abaxialen Abschnitt (110a), einen dem abaxialen Abschnitt (110a) gegenüberliegenden adaxialen Abschnitt (110b) in der Nähe der Mittelachse (131) des Kanals (11) und einen Seitenabschnitt (110c) zum Verbinden des abaxialen Abschnitts (110a) und des adaxialen Abschnitts (110b) umfasst, **dadurch gekennzeichnet, dass** sich die Rippen (14) zumindest teilweise an dem abaxialen Abschnitt (110a) befinden und der abaxiale Abschnitt (110a) einen glatten Mittelteil (112) umfasst, wobei der Mittelteil (112) einen Wälzweg für die Kugeln (12) bildet und sich die Rippen (14) auf mindestens einer Seite des Mittelteils (112) des abaxialen Abschnitts (110a) befinden.

2. Auswuchtring (2) nach Anspruch 1, **dadurch gekennzeichnet, dass** sich die Rippen (14) zumindest teilweise in einer Ecke (114) befinden, die den abaxialen Abschnitt (110a) und den Seitenabschnitt (110c) verbindet.

3. Auswuchtring (2) nach Anspruch 2, **dadurch gekennzeichnet, dass** zwischen den Rippen (14) und der Ecke (114) Raum zum Aufnehmen des viskosen Fluids gebildet ist.

4. Auswuchtring (2) nach einem der vorhergehenden Ansprüche, **dadurch gekennzeichnet, dass** die Rippen (14) bogenförmige, konkave Rückenabschnitte (140) aufweisen.

5. Auswuchtring (2) nach Anspruch 4, **dadurch gekennzeichnet, dass** die Bogenmaße der Rückenabschnitte (140) der Rippen (14) der Form der Kugeln (12) entsprechen.

6. Auswuchtring (2) nach einem der Ansprüche 4 und 5, **dadurch gekennzeichnet, dass** die Rückenabschnitte (140) der Rippen (14) und die Kugeln (12) in einem Radialschnitt des ringförmigen Kanals (11) konzentrische Kreise bilden.

7. Auswuchtring (2) nach einem der vorhergehenden Ansprüche, **dadurch gekennzeichnet, dass** zwischen den Rippen (14) und den Kugeln (12) Spalte (15) vorgesehen sind und das viskose Fluid in die Spalte (15) gefüllt ist.

8. Auswuchtring (2) nach einem der vorhergehenden Ansprüche, **dadurch gekennzeichnet, dass** die Rippen (14) gleichmäßig auf einem Umfang des ringförmigen Kanals (11) verteilt sind.

9. Auswuchtring (2) nach einem der vorhergehenden Ansprüche, **dadurch gekennzeichnet, dass** die Rippen (14) in einer radialen Richtung des ringförmigen Kanals (11) verlaufen.

10. Waschmaschine (1), die Folgendes umfasst: eine Trommel (7), die von einem Motor (8) drehangetrieben werden kann, **dadurch gekennzeichnet, dass** ein Umfang der Trommel (7) mit dem Auswuchtring (2) nach einem der vorhergehenden Ansprüche versehen ist.

## Revendications

1. Anneau d'équilibrage (2) pour un lave-linge (1), comprenant : un canal annulaire (11), dans lequel un fluide visqueux et une pluralité de sphères (12) pouvant rouler le long du canal (11) sont disposés dans le canal (11), **dans lequel** une paroi intérieure (110) du canal (11) est dotée d'une pluralité de nervures (14) et dans lequel la paroi intérieure (110) du canal (11) comprend une portion abaxiale (110a) éloignée raidalement de l'axe central (13) du canal (11), une partie adaxiale (110b) opposée à la partie abaxiale (110a) et proche de l'axe central (131) du canal (11), et une partie latérale (110c) pour relier la partie abaxiale (110a) et la partie adaxiale (110b) **caractérisé en ce que** les nervures (14) sont au moins partiellement situées sur la partie abaxiale (110a) et la partie abaxiale (110a) comprend une pièce centrale lisse (112), la pièce centrale (112) forme un chemin de roulement pour les sphères (12) et les nervures (14) sont situées en au moins un côté de la pièce centrale (112) de la partie abaxiale (110a).

2. Anneau d'équilibrage (2) selon la revendication 1, **caractérisé en ce que** les nervures (14) sont au moins partiellement situées en un angle (114) qui relie la partie abaxiale (110a) et la partie latérale (110c).

3. Anneau d'équilibrage (2) selon la revendication 2, **caractérisé en ce qu'**un espace pour l'accueil du fluide visqueux est formé entre les nervures (14) et l'angle (114).

4. Anneau d'équilibrage (2) selon l'une quelconque des revendications précédentes, **caractérisé en ce que** les nervures (14) possèdent des parties de crête (140) arquées concaves.

5. Anneau d'équilibrage (2) selon la revendication 4, **caractérisé en ce que** les radians des parties de crête (140) des nervures (14) correspondent aux formes des sphères (12).

6. Anneau d'équilibrage (2) selon l'une des revendications 4 et 5, **caractérisé en ce que** les parties de crête (140) et les sphères (12) forment des cercles concentriques sur une section radiale du canal annulaire (11).

7. Anneau d'équilibrage (2) selon l'une quelconque des revendications précédentes, **caractérisé en ce que** des vides (15) sont prévus entre les nervures (14) et les sphères (12) et le fluide visqueux est versé dans les vides (15).

8. Anneau d'équilibrage (2) selon l'une quelconque des revendications précédentes, **caractérisé en ce que** les nervures (14) sont uniformément réparties le long d'une circonférence du canal annulaire (11).

9. Anneau d'équilibrage (2) selon l'une quelconque des revendications précédentes, **caractérisé en ce que** les nervures (14) s'étendent le long d'une direction radiale du canal annulaire (11).

10. Lave-linge (1), comprenant : un tambour (7) qui peut être entraîné en rotation par un moteur (8), **caractérisé en ce qu'**une circonférence du tambour (7) est dotée de l'anneau d'équilibrage (2) selon l'une quelconque des revendications précédentes.
